# EUROPÄISCHE PATENTSCHRIFT

(11) **EP 2 957 802 B1**
(45) Veröffentlichungstag und Bekanntmachung des Hinweises auf die Patenterteilung: **13.09.2017**
(21) Anmeldenummer: 15401048.2
(22) Anmeldetag: 01.06.2015
(51) Int. Cl.: F16K 31/524, A01C 23/00, F16K 11/18, F16K 11/16, F16K 11/14

(54) **MEHRWEGEVENTIL MIT ZWEISTUFIGER BETÄTIGUNG**
MULTIWAY VALVE WITH TWO-STAGE ACTUATION
VANNE MULTI-VOIES A ACTIONNEMENT EN DEUX ETAPES

(30) Priorität: 17.06.2014 DE 102014108472
(43) Veröffentlichungstag der Anmeldung: 23.12.2015
(73) Patentinhaber: Amazonen-Werke H. Dreyer GmbH & Co. KG, 49205 Hasbergen (DE)
(72) Erfinder: Austermann, Stefan, 48291 Telgte (DE); Langkamp, Laurenz, 49545 Tecklenburg (DE); Große Prues, Frank, 49434 Neuenkirchen-Vörden (DE); Müller, Norbert, 53179 Bonn (DE)

(56) Entgegenhaltungen:
- DE-A1-102006 006 985
- DE-A1-102007 007 870
- DE-B- 1 045 749
- NL-C- 59 688

## Beschreibung

Die vorliegende Erfindung betrifft ein Mehrwegeventil, das insbesondere für landwirtschaftliche Feldspritzen verwendet werden kann, und das einen Versorgungsanschluss für eine Druckleitung, N-Verbraucheranschlüsse, N-Ventilelemente, die jeweils eine Fluid durchlässige Verbindung zwischen dem Versorgungsanschluss und mindestens einem der N-Verbraucheranschlüsse herstellen können, und ein Stellglied zur Auswahl mindestens eines der N-Ventilelemente und zum Bewegen des ausgewählten Ventilelements in eine geöffnete Position oder eine geschlossene Position umfasst. Solche Mehrwegeventile für landschaftliche Feldspritzen sind auch unter der Bezeichnung Druckhahn bekannt.

Ein Mehrwegventil gemäß des Oberbegriffes des Anspruches 1 ist durch die NL 59688 C bekannt.

Ein Mehrwegeventil, insbesondere für landwirtschaftliche Feldspritzen, ist beispielsweise aus der DE 10 2006 006 985 A1 bekannt. Diese Offenlegungsschrift für eine deutsche Patentanmeldung offenbart ein Mehrwegeventil mit einem Gehäuse, an dem eine als Druckleitung ausgebildete Zugangsleitung und mehrere Abgangsleitungen angeschlossen sind. Eine, der Anzahl der Abgangsleitungen entsprechende Anzahl von Ventilkörpern sind kreisförmig um ein drehbar gelagertes zentrales Betätigungselement angeordnet. Zur Auswahl eines bestimmten Ventils bzw. einer bestimmten Abgangsleitung wird das zentrale Betätigungselement über die Schaltwelle zu dem entsprechenden zu betätigende Ventil bewegt. Die Anordnung ist so gestaltet, dass bei der Drehbewegung das zentrale Betätigungselement den Ventilkörper so nach außen schiebt, dass eine Verbindung zwischen der Druckleitung und der dem Ventil entsprechenden Abgangsleitung freigegeben wird. Soll ein Ventil ausgewählt werden, bei dem zwischen der momentanen Stellung des Betätigungselements und dem auszuwählendem Ventil mehrere Ventile dazwischen liegen, muss das Betätigungselement an diesen Ventilelementen vorbei bewegt werden, wobei diese Ventilelemente kurzzeitig betätigt werden. Bei der Auswahl eines bestimmten Ventils werden deshalb in der Regel mehrere Ventile kurzzeitig betätigt, d.h. die entsprechenden Abgangsleitungen werden kurzzeitig unter Druck gesetzt. Dies bedeutet auch, dass Flüssigkeit in Abgangsleitungen gelangt, bei denen dies eigentlich nicht vorgesehen war. Weiterhin bedeutet dies auch einen unerwünschten Energieverlust beim Schaltvorgang, da der kurzzeitige Druckverlust durch die Ableitung in die unerwünschten Abgangsleitungen kompensiert werden muss.

Eine ähnliche Anordnung für ein Mehrwegeventil, insbesondere für eine landwirtschaftliche Feldspritze, wird auch in der Offenlegungsschrift der Patenanmeldung DE 10 2007 007 870 A1 offenbart. Dieser Stand der Technik zeigt ein Mehrwegeventil mit einem Gehäuse, in welches eine Saugleitung und entsprechend der Anzahl der Wege mehrere Zuleitungen, denen die Einmündung der Zuleitungen verschließenden und freigebenden Ventilkörper zugeordnet sind, münden. Das dort gezeigte Mehrwegeventil weist auch ein zentrales Betätigungselement auf, mittels dessen die Ventilkörper in eine Schließ- oder Öffnungsstellung versetzbar sind. Um ein einfach aufgebautes und kompaktes Mehrwegeventil zu schaffen, sind die Zuleitungen sternförmig in das Gehäuse einmündend angeordnet. Das Mehrwegeventil weist ein von einem Handhebel zu betätigendes zentrales Betätigungselement auf, mittels welchem die den Anschlussleitungen zugeordneten Ventilkörper betätigt werden können. Die Ventilkörper sind senkrecht zur Drehachse des zentralen Betätigungselements radial nach außen beweglich und werden über eine Feder in einer geschlossenen Position, d.h. radial nach innen gedrückt, gehalten. Das zentrale Betätigungselement besteht aus einer Schaltwelle an der ein Betätigungsnocken angebracht ist. Durch Drehen der Schaltwelle wird der Nocken zu einem Ventilelement positioniert. Der Nocken schiebt das Ventilelement dann aus seiner geschlossenen Position gegen den Federdruck in eine geöffnete Position. Beim Positionieren des Nockens an ein bestimmtes Ventilelement werden alle Ventilelemente, die zwischen der momentanen Stellung des Nocken und dem auszuwählenden Ventilelement liegen, kurz betätigt. Dadurch fließt unerwünscht Flüssigkeit aus einer nicht angewählten Zuleitung in die Saugleitung ab, d.h. es entstehen unerwünschte Flüssigkeits- und auch Druckverluste, die kompensiert werden müssen.

Es ist deshalb eine Aufgabe der vorliegenden Erfindung, ein Mehrwegeventil bereitzustellen, das in jede beliebige Stellung gebracht werden kann, ohne dass einzelne Ventilelemente beidem Auswahlvorgang betätigt werden müssen.

Diese Aufgabe wird gelöst durch ein Mehrwegeventil gemäß Anspruch 1. Insbesondere wird diese Aufgabe gelöst durch ein Mehrwegeventil, das Folgendes umfasst: einen Versorgungsanschluss; N-Verbraucheranschlüsse; N-Ventilelemente, die jeweils eine fluiddurchlässige Verbindung zwischen dem Versorgungsanschluss und mindestens einem der N-Verbraucheranschlüsse herstellen können; und ein Stellglied zur Auswahl mindestens eines der N-Ventilelemente und zum Betätigen des ausgewählten Ventilelements in eine geöffnete Position oder eine geschlossene Position. Das erfindungsgemäße Mehrwegeventil ist dadurch gekennzeichnet, dass das Stellglied und die N-Ventilelemente so ausgebildet und angeordnet sind, dass die Auswahl und das Betätigen eines der N Ventilelemente unabhängig in 2 Stufen erfolgt, so dass während der Auswahl des mindestens einen Ventilelements keines der N Ventilelemente betätigt wird.

Dadurch ist es mit dem Stellglied möglich, den Auswahlvorgang und den Betätigungsvorgang getrennt, d.h. unabhängig voneinander, durchzuführen, beispielsweise durch unterschiedliche Bewegungsrichtungen des Stellglieds für den Auswahlvorgang und den Betätigungsvorgang, so dass während der Auswahl eines bestimmten Ventilelements kein Ventilelement betätigt wird. Die Anordnung und die Betätigungsrichtung der Ventilelemente müssen dann den Bewegungsrichtungen des Stellglieds angepasst sein. Erfindungsgemäß weist das Stellglied einen sich bezüglich einer zentralen Achse radial nach außen erstreckenden Vorsprung auf; und jedes der N-Ventilelemente weist eine Aussparung auf, in die der Vorsprung des Stellglieds eingreifen kann. Durch die Aussparung in jedem Ventilelement kann der Vorsprung des Stellglieds einerseits bei der Auswahl des Ventilelements ungehindert die nicht ausgewählten Ventilelemente passieren und andererseits dient die Aussparung als Eingriff für den Vorsprung, so dass das Stellglied das Ventilelement in eine offene oder geschlossene Position betätigen kann. Dabei ist der Vorsprung des Stellglieds so ausgebildet, dass er sich über einen radialen Bereich erstreckt, der wahlweise die Betätigung eines einzelnen Ventilelements oder die gleichzeitige Betätigung zweier benachbarter Ventilelemente erlaubt. D.h., wird der Vorsprung des Stellglieds mit einer ausreichenden Breite ausgebildet, kann der Vorsprung des Stellglieds in einer Zwischenposition zwischen zwei benachbarten Ventilelementen in beide Aussparungen eingreifen und somit eine gleichzeitige Betätigung der benachbarten Ventilelemente ermöglichen. In einer Ausführungsform sind die N-Ventilelemente kreisförmig um eine zentrale Achse in entsprechenden Hohlräumen eines Mehrwegeventilgehäuses so angeordnet, dass die N-Ventilelemente unabhängig voneinander parallel zur zentralen Achse innerhalb des entsprechenden Hohlraums zwischen einer geöffneten Position und einer geschlossenen Position beweglich sind. Bei dieser Anordnung führt das Stellglied bei der Ventilauswahl eine Drehbewegung aus. Bei der anschließenden Betätigung des ausgewählten Ventils führt das Stellglied eine Bewegung parallel zur Drehachse (zentralen Achse) aus. Da die Bewegungsrichtung zur Betätigung des Ventils senkrecht zur Bewegungsrichtung des Stellglieds bei der Ventilauswahl ist, ist es mit dieser Anordnung ist es möglich, eine Auswahl von Ventilelementen unabhängig von deren Betätigung durchzuführen.

In einer Ausführungsform kann dies realisiert werden, indem das Schaltglied um die zentrale Achse drehbar und parallel zur zentralen Achse verschiebbar gelagert ist. D.h. durch Drehen des Stellglieds um die zentrale Achse kann ein Ventil ausgewählt werden und durch Verschieben des Stellglieds parallel zur zentralen Achse kann ein ausgewähltes Ventil betätigt werden. Die Drehbewegung und die vertikale Bewegung des Stellglieds kann unabhängig durchgeführt werden.

In einer weiteren Ausführungsform umfasst das Mehrwegeventil weiterhin eine zur zentralen Achse koaxial angeordnete und relativ zum Mehrwegeventilgehäuse drehbar gelagerte Schaltwelle, wobei das Stellglied relativ zur Schaltwelle verdrehsicher aber parallel zur zentralen Achse beweglich mit der Schaltwelle verbunden ist, so dass das Stellglied durch die Schaltwelle um die zentrale Achse gedreht werden kann, um mindestens eines der N-Ventilelemente auszuwählen; und eine Verschiebungseinrichtung zum Verschieben des Stellglieds parallel zur zentralen Achse relativ zur Schaltwelle, so dass das Stellglied durch die

Verschiebungseinrichtung relativ zur Schaltwelle entlang der zentralen Achse zwischen einer ersten Position entsprechend einem geschlossenen Ventil und einer zweiten Position entsprechend einem geöffnetem Ventil verschoben werden kann, um das mindestens eine ausgewählte Ventilelement zu öffnen oder zu schließen. Mit dieser Ausführungsform lässt sich die Auswahl eines Ventilelements und die Betätigung des ausgewählten Ventilelements unabhängig voneinander realisieren, in dem das Stellglied über eine Schaltwelle zum Auswählen gedreht werden kann und in dem das Stellglied mit einer Verschiebungseinrichtung parallel zur zentralen Achse verschoben werden kann. Die beiden Elemente "Schaltwelle" und "Verschiebungseinrichtung" erlauben die voneinander unabhängig betätigbare Bewegung des Stellglieds in axialer Richtung und in Rotationsrichtung.

Um eine präzise Führung des Stellglieds entlang der zentralen Achse und um die zentrale Achse zu erreichen, kann das Stellglied zumindest teilweise als Hohlzylinder ausgeführt sein, wobei der Hohlzylinder die Schaltwelle aufnimmt. D.h. das Stellglied ist koaxial um die Schaltwelle herum angeordnet.

In einer weiteren Ausführungsform sind das Stellglied und die N-Ventilelemente so ausgebildet und angeordnet, dass die Schaltwelle nur dann gedreht werden kann, wenn sich das Stellglied in der ersten Position befindet. Mit anderen Worten, eine Auswahl eines Ventils kann nur stattfinden, wenn alle Ventilelemente einen definierten Zustand aufweisen. Dadurch wird die Betriebssicherheit des Ventils sichergestellt, da keine undefinierten Schaltzustände auftreten können, wodurch sich die Schaltmechanik eventuell verklemmen kann.

Beispielsweise kann das Mehrwegeventil so ausgebildet sein, dass sich alle N-Ventilelemente in der geschlossenen Position befinden, wenn der Versorgungsanschluss unter Druck steht. Das heißt, dass die Ventilelemente normalerweise (d.h., wenn sich das Stellglied in der ersten Position befindet) geschlossen sind und aktiv mit dem Stellglied geöffnet werden müssen, wenn eine Verbindung zwischen dem Versorgungsanschluss und einem Verbraucheranschluss hergestellt werden soll. Da die Ventile normalerweise geschlossen sind, kann auch kein undefinierter Ventilzustand bei der Auswahl eines Ventilelements entstehen, so dass die Funktionstüchtigkeit des Mehrwegeventils sicher gestellt ist.

In einer anderen Ausführungsform umfasst das Mehrwegeventil weiterhin mindestens ein Vorspannelement, das zumindest eines der N Ventilelemente in einer geschlossenen Position hält, solange es nicht durch das Stellglied betätigt wird. Durch das Vorspannelement wird sichergestellt, dass sich das Ventilelement selbst dann in einer definierten, vorzugsweise einer geschlossenen Position befindet, wenn kein Druck am Versorgungsanschluss anliegt. Auch diese Maßnahme dient dazu, die Betriebssicherheit des Mehrwegeventils zu verbessern. Vorzugsweise ist jedes der N Ventilelemente mit einem Vorspannelement ausgestattet.

In einer Ausführungsform weist das Mehrwegeventil weiterhin eine Vorrichtung zum Auswählen eines Ventilelements und zum Betätigen des ausgewählten Ventilelements auf. Diese Vorrichtung zum Auswählen und Betätigen kann beispielsweise ein manuell betätigbarer Hebel sein, der über einen Stift an einem Mitnehmer am Ende der Schaltwelle befestigt ist, so dass der Hebel senkrecht zur zentralen Achse mit dem Stift als Drehachse drehbar ist und parallel zur zentralen Achse relativ zur Schaltwelle verdrehsicher ist, wobei der Hebel weiterhin über einem Zylinderstift an einem Ende des Stellglieds befestigt ist, so dass das Stellglied relativ zur Schaltwelle mit dem Hebel parallel zur zentralen Achse verschoben werden kann. Dadurch wird der Hebel mit der Schaltwelle und dem Stellglied zueinander verdrehsicher miteinander verbunden, so dass mit dem Hebel der Vorsprung des Stellglieds zu einem bestimmten Ventilelement gedreht/positioniert werden kann. Durch den Stift ist der Hebel weiterhin senkrecht zur Auswahldrehbewegung drehbar an dem Mitnehmer gelagert, so dass sich beim Drehen des Hebels um die Stiftachse (senkrecht zur zentralen Achse) das Stellglied über den Zylinderstift am Hebel anheben lässt, wobei sich der Hebel an dem Stift in dem Mitnehmer abstützen kann. Dadurch lassen sich durch den manuell betätigbaren Hebel sowohl die Auswahlmechanik als auch die Betätigungsmechanik für jedes der N-Ventile unabhängig voneinander betätigen. In einer Ausführungsform des Mehrwegeventils weist eine Außenseite eines zylinderförmigen Abschnittes des Stellglieds zwei übereinander liegende Reihen mit jeweils N Einkerbungen oder optional 2 x N Einkerbungen auf, so dass das Stellglied an einer ausgewählten Ventilposition oder optional zusätzlich an Zwischenpositionen zwischen zwei benachbarten Ventilelementen in einer geöffneten Position oder einer geschlossenen Position einrasten kann. Dadurch kann beim Drehen des Hebels/Schaltgriffs in neutraler bzw. geschlossener Position zur Auswahl des Ventilelements der Hebel an den einzelnen Ventilpositionen oder optional auch in Zwischenpositionen einrasten, so dass die Schaltpositionen bzw. Betätigungspositionen einfach gefunden werden können. So entsteht eine haptische und akustische Rückmeldung beim Einstellen der Ventilpositionen.

In einer weiteren Ausführungsform umfasst das Mehrwegeventil mindestens einen Dichtungsring zwischen der Schaltwelle und dem Stellglied sowie einen Nutring zwischen dem Stellglied und dem Gehäuse, um den unter Druck stehenden Innenraum des Ventils so abzudichten, dass keine Flüssigkeit an den Spalten zwischen Stellglied und Schaltwelle sowie zwischen dem Stellglied und dem Gehäuse nach außen dringen kann. Der Nutring hat weiterhin den Vorteil, dass die Abdichtungswirkung bei zunehmendem Druck immer besser wird. Weiterhin kann der Nutring Unrund- und Unebenheiten sowie Störungen in der Oberfläche des Gehäuses ausgleichen.

In einer anderen Ausführungsform des Mehrwegeventils umfasst die Vorrichtung zum Auswählen eines Ventilelements einen ersten Motor mit einem ersten Getriebemechanismus und die Vorrichtung zum Betätigen des ausgewählten Ventilelements umfasst einen zweiten Motor mit einem zweiten Getriebemechanismus. Damit kann ein vollautomatischer Betrieb des Mehrwegeventils realisiert werden.

Im Folgenden werden Ausführungsbeispiele, Weiterbildungen, Vorteile und Anwendungsmöglichkeiten der Erfindung anhand der beigefügten Figuren näher erläutert. In den Figuren zeigt
- Fig. 1: eine perspektivische 3D-Ansicht des erfindungsgemäßen Mehrwegeventils;
- Fig. 2: eine Ansicht von oben des Mehrwegeventils der Fig. 1;
- Fig. 3: einen Schnitt durch das Mehrwegeventil entlang der Linie I-I in der Fig. 2 mit dem Ventilelement in neutraler bzw. geschlossener Position;
- Fig. 4: einen Schnitt durch das Mehrwegeventil entlang der Linie I-I der Fig. 2 mit dem Ventilelement in einer geöffneten Position;
- Fig. 5: einen Schnitt durch das Mehrwegeventil entlang der Linie II-II der Fig. 2 zeigt;
- Fig. 6: eine alternative Ausführungsform des erfindungsgemäßen Mehrwegeventils mit einer Hebelstellung für ein Ventil in geschlossener Position zeigt;
- Fig. 7: das Mehrwegeventil der Fig. 6 mit einer Hebelstellung für eine geöffnete Ventilposition zeigt;
- Fig. 8: eine Ausführungsform des erfindungsgemäßen Mehrwegeventils in einer Ansicht von oben bei abgenommenen oberen Gehäuseteil zeigt;
- Fig. 9: eine perspektivische 3D-Ansicht einer Ausführungsform des erfindungsgemäßen Mehrwegeventils mit Motorsteuerung zeigt; und
- Fig. 10: eine Schnittansicht des Motor betriebenen Mehrwegeventils der Fig. 9 zeigt.

Die vorliegende Erfindung erfolgte, um ein Mehrwegeventil bereitzustellen, das die Nachteile von bekannten Mehrwegeventilen überwindet. Insbesondere wird mit der vorliegenden Erfindung der Nachteil überwunden, dass bei der Auswahl eines bestimmten Ventils in einem Mehrwegeventil diejenigen Ventile, die bei der Auswahl überfahren werden, kurzzeitig betätigt werden. Durch die kurzzeitigen Ventilbetätigungen werden die entsprechenden Abgangsleitungen kurzzeitig unter Druck gesetzt, was zu ungewollter Kontamination, Druckverlust und Energieverlust beim Schaltvorgang führt. Dieses Problem wird erfindungsgemäß dadurch gelöst, dass das Stellglied so ausgelegt wird, dass es möglich wird, den Auswahlvorgang und den Betätigungsvorgang getrennt, d.h. unabhängig voneinander, durchzuführen, beispielsweise durch unterschiedliche Bewegungsrichtungen des Stellglieds für den Auswahlvorgang und den Betätigungsvorgang, so dass während der Auswahl eines bestimmten Ventilelements kein Ventilelement betätigt wird. Die Anordnung und die Betätigungsrichtung der Ventilelemente müssen dann den Bewegungsrichtungen des Stellglieds angepasst sein.

In den folgenden Beispielen sind die Ventilelemente und das Stellglied so angeordnet und ausgelegt, dass die Ventilauswahl durch eine Drehbewegung des Stellglieds erfolgt. Zur anschließenden Betätigung des ausgewählten Ventils führt das Stellglied eine Bewegung parallel zur Drehachse aus. Da die Bewegungsrichtung zur Betätigung des Ventils senkrecht zur Bewegungsrichtung des Stellglieds bei der Ventilauswahl ist, ist es mit dieser Anordnung möglich, eine Auswahl von Ventilelementen unabhängig von deren Betätigung durchzuführen.

Obwohl die Ausführungsbeispiele hier eine Ventilauswahl durch eine Drehbewegung des Stellglieds beschreiben und die Betätigungsbewegung parallel zur Drehachse erfolgt, ist diese Erfindung nicht auf diese Fälle beschränkt. Beispielsweise kann die Ventilauswahl durch eine Drehbewegung erfolgen und die Betätigung des Ventilelements erfolgt durch eine zur Drehachse radial nach außen oder innen gerichtete Bewegung. Die Ventilauswahl kann auch durch eine lineare Bewegung des Stellglieds erfolgen. Die anschließende Betätigung des Ventilelements erfolgt dann durch eine dazu senkrecht gerichtete Bewegung des Stellglieds.

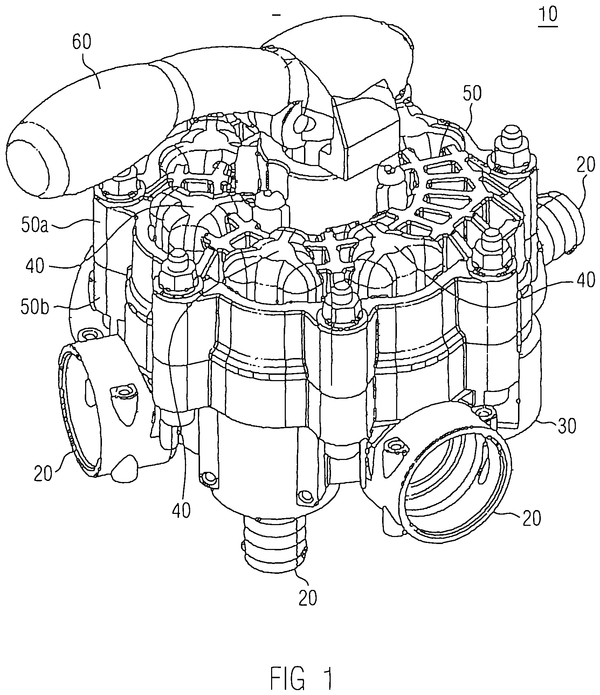

Fig. 1 zeigt eine perspektivische 3D-Ansicht einer Ausführungsform eines Mehrwegeventils 10, das für eine landwirtschaftliche Feldspritze geeignet ist, für eine manuelle Betätigung. Solch ein Mehrwegeventil wird auch als Druckhahn bezeichnet. Fig. 1 zeigt ein zweiteiliges Gehäuse 50 mit einem oberen Gehäuseteil 50a und einem unteren Gehäuseteil 50b, die mit Schrauben (ohne Bezugszeichen) miteinander verschraubt sind. Im unteren Gehäuseteil 50b befindet sich ein Versorgungsanschluss 30 und mehrere Verbraucheranschlüsse 20. Den Verbraucheranschlüssen 20 zugeordnet sind Ventilelemente 40, die um eine zentrale Achse (in Fig. 1 nicht eingezeichnet) des Mehrwegeventils 10 angeordnet sind. Jeder Verbraucheranschluss 20 wird durch ein separates Ventilelement 40 verschlossen. In Fig. 1 sind an der Oberseite des Gehäuseoberteils 50a sternförmige Abdeckungen für sternförmige Führungen der Ventilelemente 40 zu sehen. Fig. 1 zeigt weiterhin einen handbetätigbaren Hebel 60, mit dem Ventile ausgewählt und geöffnet werden können.

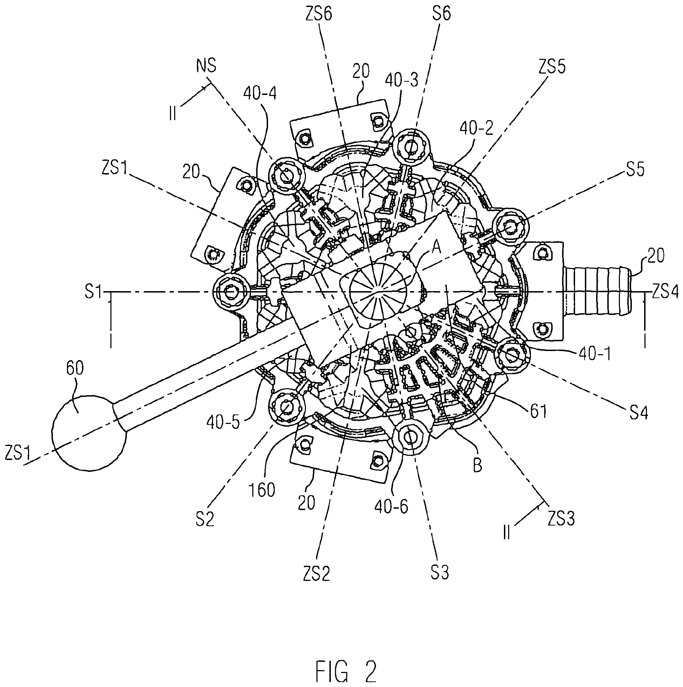

Fig. 2 zeigt eine Ansicht des Mehrwegeventils aus der Fig. 1 von oben. Der manuell betätigbare Hebel 60 ist koaxial zur zentralen Gehäuseachse A an der Oberseite des Gehäuses relativ zum Gehäuse drehbar angeordnet. Sechs Ventilelemente 40-1, 40-2, 40-3, 40-4, 40-5 und 40-6 sind kreisförmig um die zentrale Achse A in dem Ventilgehäuse 50 angeordnet. In der Fig. 2 bezeichnen Bezugszeichen, die identisch sind zu Bezugszeichen in der Fig. 1, dieselben Merkmale. Dies gilt auch für alle folgenden Figuren. Um Wiederholungen zu vermeiden, wird in der Regel das zum Bezugszeichen gehörende technische Merkmal beim ersten Auftreten beschrieben und auf weitere Wiederholungen in den folgenden Figuren verzichtet.

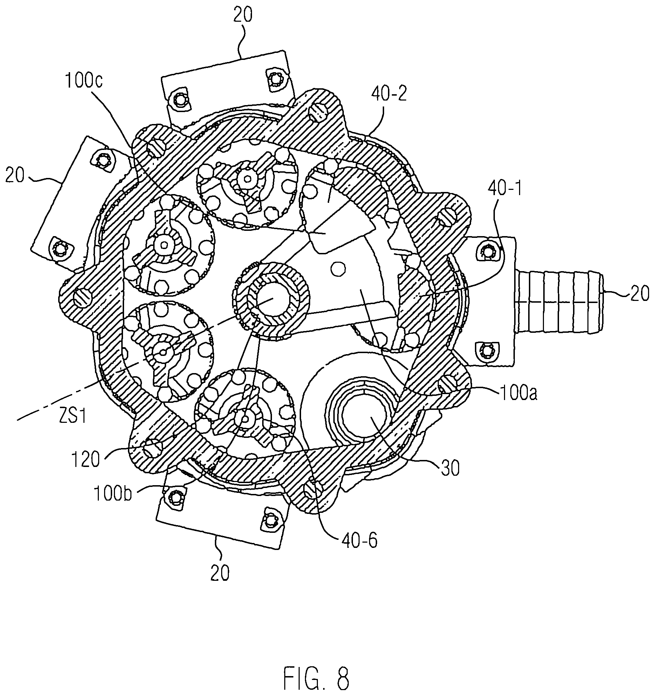

Mit dem Hebel 60 können durch Drehen um die Achse A einzelne Ventile ausgewählt werden. Die strichpunktierten Linien in der Fig. 2 geben Positionen für mögliche Stellungen des Hebels 60 an. Die Fig. 2 zeigt eine Stellung des Hebels 60 auf der Position ZS1. Diese Stellung entspricht einer Zwischenstellung zwischen den Ventilelementen 40-1 und 40-2. In dieser Zwischenstellungsposition können die Ventilelemente 40-1 und 40-2 gleichzeitig betätigt werden, wie in Verbindung mit Fig. 8 näher erläutert wird. Analog können auch in den Zwischenstellungen ZS2, ZS3, ZS4 und ZS5 Zwischenstellungen zwischen zwei Ventilen angewählt werden. Die Stellungen S1, S2, S3, S4, S5 und S6 bedeuten, dass der Hebel 60 das Ventilelement 40-1 (S1), 40-2 (S2), 40-3 (S3), 40-4 (S4), 40-5 (S5) oder 40-6 (S6) ausgewählt hat. Die Stellungen ZS1, ZS2, ZS3, ZS4, ZS5, ZS6 und ZS7 sind Positionen für Zwischenstellungen. Die Stellung NS ist eine Neutralstellung, bei der kein Ventil ausgewählt wird. Durch Drehen des Hebels 60 kann jedes der sechs Ventilelemente 40-1 bis 40-6 direkt angewählt werden. Durch Drücken des Hebels 60 nach unten, d.h. senkrecht zur Zeichnungsebene vom Betrachter weg, dreht sich der Hebel 60 um einen Zylinderstift 160 senkrecht zur Blattebene, wodurch ein Stellglied im Ventilgehäuse (in Fig. 2 nicht sichtbar) angehoben wird und damit das ausgewählte Ventilelement in eine geöffnete Position bringt. In geöffneter Ventilposition lässt sich der Hebel 60 nicht mehr um die zentrale Achse A drehen. In der Stellung des Hebels 60, in der der Hebel 60 um die zentrale Achse A gedreht werden kann, sind alle Ventilelemente 40-1 bis 40-6 geschlossen. D.h. während der Positionierung des Stellglieds (in Fig. 2 nicht gezeigt) durch den Hebel 60 auf eine der Positionen S1 bis S6, NS und ZS1 bis ZS7 wird keiner der sechs Verbraucheranschlüsse 20 bzw. der zugeordneten Ventilelemente 40-1 bis 40-6 offen überfahren.

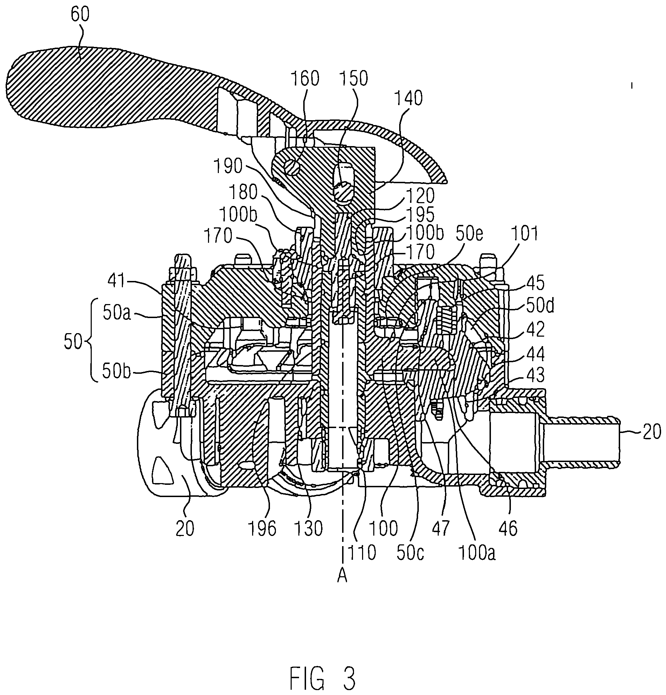

Fig. 3 zeigt einen Schnitt durch das Mehrwegeventil entlang der Linie I-I, d.h. entlang der Linie zwischen den Hebelstellungen S1 und ZS4, jedoch mit dem Hebel 60 auf Stellung S1. Die in Fig. 3 gezeigte Schnittdarstellung zeigt das ausgewählte Ventilelement in geschlossener Position. Die Fig. 3 zeigt einen Querschnitt durch das Gehäuse 50 mit einem Gehäuseoberteil 50a und einem Gehäuseunterteil 50b, die über Schrauben (ohne Bezugszeichen) miteinander verbunden sind. Das Bezugszeichen 20 bezeichnet wieder die Verbraucheranschlüsse. In dem Gehäuse 50 sind Hohlräume ausgebildet, in denen Ventilkörper 42 liegen. Die Hohlräume sind so ausgebildet, dass sich der Ventilkörper 42 vertikal, d.h. parallel zur zentralen Achse A bewegen kann. Jeder Ventilkörper 42 weist an der Unterseite eine Dichtung 44 und Zentrierzapfen 43 auf. Die in der in Fig. 3 gezeigte Darstellung weist der Ventilkörper 42 vier Zapfen auf. Die Ventile werden durch die vier Zapfen an der Unterseite im Unterteil des Gehäuses zentriert. Jeweils einer der Zapfen dient als Ausrichthilfe des Ventils während der Montage. Im Unterteil des Gehäuses 50b sind in den Ausströmöffnungen zwei Leisten angespritzt (in Fig. 3 nicht sichtbar), in denen der Zapfen geführt wird. Die Dichtung 44 dichtet den Ausströmtrichter zum Verbraucheranschluss 20 ab und kann dabei Unrund- und Unebenheiten sowie Störungen in der Oberfläche des Gehäuses ausgleichen. Wenn der Versorgungsanschluss (in Fig. 3 nicht gezeigt, Bezugszeichen 30 in Fig. 1) unter Druck steht, wird der Ventilkörper 42 nach unten gedrückt, so dass die Dichtung 44, beispielsweise eine an den Ventilkörper 42 angespritzte Dichtung, gegen das Gehäuseunterteil 50b gedrückt wird, so dass der Verbraucheranschluss 20 abgedichtet wird. An der Oberseite des Ventilkörpers 42 befindet sich eine sternförmige Ventilführung 47, die in einer sternförmigen Aussparung 41 im Gehäuseoberteil 50a aufgenommen wird, um zusammen mit dem Zentrierzapfen 43 den Ventilkörper 42 in axialer Richtung parallel zur zentralen Achse A sowohl im Gehäuseoberteil 50a als auch im Gehäuseunterteil 50b zu führen. Der Hohlraum zur Aufnahme des Ventilkörpers 42 ist so ausgestaltet, dass in einer geschlossenen Ventilposition oberhalb des Ventilkörpers Hohlräume 50c und 50d frei bleiben, um eine vertikale Bewegung des Ventilkörpers 42 (parallel zur zentralen Achse A) zu ermöglichen. Um den Ventilkörper 42 auch bei einem niedrigen Druck am Versorgungsanschluss sicher in einer geschlossenen Lage zu halten, befindet sich im Bereich der sternförmigen Ventilführungen 47 eine Druckfeder, die den Ventilkörper 42 nach unten in die geschlossene Position drückt. Der Ventilkörper 42 enthält eine Aussparung 46, in die ein Vorsprung 100a eines Stellglieds 100 eingreifen kann. In einer geschlossenen Position des Ventilkörpers 42 kann der Vorsprung 100a des Stellglieds 100 an dem Ventilkörper 42 frei vorbei bewegt werden ohne das Ventil zu betätigen, d.h. das geschlossene Ventil bleibt geschlossen.

Das Stellglied 100 ist verdrehsicher mit einem Mitnehmer 140 verbunden, der mit einem manuell betätigbaren Hebel 60 verbunden ist, so dass eine Drehung des Hebels 60 um die zentrale Achse A eine Drehung des Vorsprungs 100a des Stellglieds 100 um die zentrale Achse A bewirkt. Durch Drehen des Hebels 60 um die Zentrale Achse A kann der Vorsprung 100a an ein auszuwählendes Ventil (40-1 bis 40-6 in Fig. 2) positioniert werden.

Im oberen Bereich des Stellglieds 100 befinden sich zwei Schlitze 190, in die der Mitnehmer 140 greift. Die Schlitze ermöglichen einen verdrehsicheren Eingriff des Mitnehmers 140 in das Stellglied 100 und erlauben andererseits, dass das Stellglied 100 relativ zum Mitnehmer 140 parallel zur zentralen Achse A verschiebbar bleibt. Der Mitnehmer 140 liegt auf einer Schaltwelle 120 auf und ist vorzugsweise fest mit der Schaltwelle 120 verbunden, oder kann ein integraler Bestandteil der Schaltwelle 120 sein, um den Mitnehmer 140 am Gehäuse 50 festzuhalten. Der Schaltgriff 60 ist an dem Mitnehmer 140 mit einen Stift 160 befestigt. Der Stift 160 dient gleichzeitig als Drehachse für den Schaltgriff/Hebel. Der Hebel 60 ist deshalb relativ zum Mitnehmer 140 um die Stiftachse des Stifts 160 drehbar gelagert. Der Hebel 60 ist jedoch hinsichtlich der zentralen Achse A relativ zum Mitnehmer 140 der Schaltwelle 120 verdrehsicher, so dass bei einer Drehung des Hebels 60 um die zentrale Achse A die Schaltwelle 120 mitgedreht wird. Da das Stellglied 100 ebenso verdrehsicher bezüglich des Mitnehmers 140 gelagert ist, dreht sich beim Drehen des Hebels 60 um die zentrale Achse A das Stellglied 100 mit.

Die Schaltwelle 120 liegt drehbar auf einer hohlen Basiswelle 110 auf. Die Basiswelle hat zur Verdrehsicherung einen Bund 130 mit mindestens einer Aussparung. In die Aussparung greift eine Nase ein (in Fig. 3 nicht sichtbar), die im Gehäuseunterteil 50b angespritzt sein kann. Die Basiswelle 110 ist mit einer Mutter (ohne Bezugszeichen) am Gehäuseunterteil 50b befestigt. Die Basiswelle 110 ist deshalb relativ zum Gehäuse 50 fixiert, d.h. nicht drehbar.

Mit der Basiswelle koaxial und frei drehbar verbunden ist die Schaltwelle 120. Zwischen Schaltwelle 120 und Basiswelle 110 kann sich zur Verschleißminderung eine Gleitscheibe befinden, oder die Schaltwelle 120 ist mit einem Verschleißschutz versehen. Die Schaltwelle 120 und die Basiswelle 110 bilden eine zueinander verdrehbare Einheit, die durch eine Schraube 170 zusammengehalten wird. Die Schraube wird von außen durch die hohlgebohrte Basiswelle 110 gesteckt.

Das Stellglied 100 weist einen Bereich 100b in Form eines Hohlzylinders und den daraus herausragenden Vorsprung 100a auf. Der hohlzylindrische Bereich 100b ist im unteren Bereich koaxial auf der Basiswelle und im oberen Bereich koaxial auf der Schaltwelle gelagert. In neutraler (geschlossener) Position des Ventilkörpers 42 kann das Stellglied 100 mit dem Vorsprung 100a ungehindert und bis zu 360° Grad um die zentrale Achse A verdreht werden, da die seitlichen Aussparungen 46 im Ventilkörper 42 den Vorsprung 100a ungehindert passieren lassen.

Mindestens eine Abdichtung 195 beispielsweise ein O-Ring, dichtet das Stellglied 100 gegenüber der Schaltwelle 120 ab. Weiterhin wird das Stellglied 100 gegenüber der Basiswelle 110 durch mindestens eine Abdichtung 196 beispielsweise ein O-Ring, abgedichtet. Die Abdichtung zwischen Stellglied 100 und Gehäuseoberteil 50a erfolgt in der Ausführungsform gemäß Fig. 3 durch einen Nutring 170. Durch den Nutring 170 wird die Abdichtungswirkung bei zunehmendem Druck immer besser. Durch seine unter Druck selbst wirkende Nachstellung kann der Nutring Verschleiß ausgleichen. Weiterhin kann der Nutring Unrund- und Unebenheiten und Störungen in der Oberfläche des Gehäuses ausgleichen. Der Nutring 170 ist im Gehäuseoberteil 50a positioniert und wird durch einen Flansch 180 fixiert. Der Flansch 180 ist mit beispielsweise drei gewindefurchenden Schrauben mit dem Gehäuseoberteil 50a verschraubt.

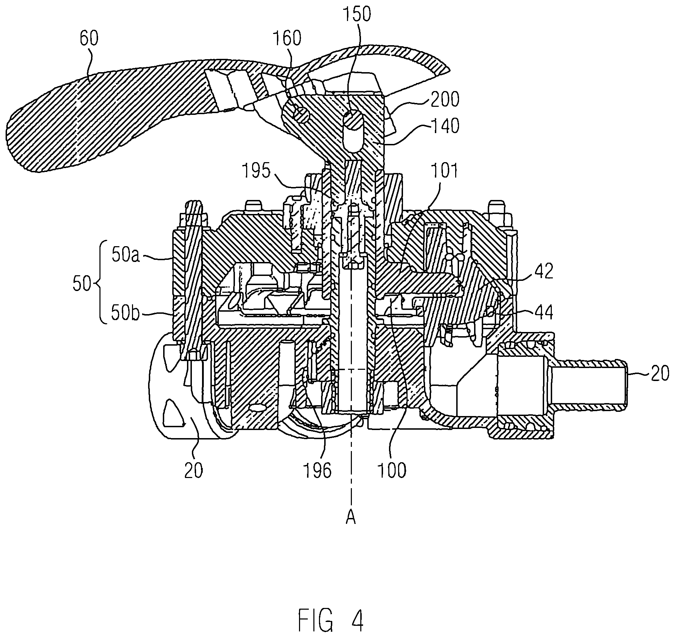

Im oberen Bereich des Stellglieds 100 steckt ein Zylinderstift 150, um das Stellglied 100 mit dem Hebel 60 so zu verbinden, dass wenn der Hebel 60 nach unten gedrückt wird, d.h. wenn sich der Hebel 60 um die Achse des Stiftes 160 dreht, das Stellglied 100 durch den Zylinderstift 150 angehoben wird. Im Mitnehmer 140 ist ein vertikaler Schlitz eingearbeitet, in dem sich der Zylinderstift 150 frei bewegen kann, um zu gewährleisten, dass sich das Stellglied 100 relativ zur Schaltwelle in einer vertikalen Richtung, (d.h. parallel zur zentralen Achse A) frei bewegen lässt. Im Bereich der zentralen Achse A des Hebels 60 können zwei Flächen angebracht sein (Bezugszeichen 200 in Fig. 4), durch die der Zylinderstift 150 läuft, so dass der Hebel 60 über den Zylinderstift 150 mit dem oberen Teil des Stellglieds 100 verbunden ist und das Stellglied 100 durch den Hebel 60 angehoben werden kann. Wenn der Hebel 60 um den Stift 160 gedreht wird, heben die Flächen 200 mittels des Zylinderstifts 150 das Stellglied 100 an und das Ventil wird geöffnet.

Diese Situation ist in der Fig. 4 dargestellt. Damit das Stellglied 100 in der geöffneten Position, wie in Fig. 4 dargestellt ist, nicht weiter gedreht werden kann, befindet sich auf der Oberseite des Vorsprungs 100a des Stellglieds 100 eine Nase 101a, die in der geöffneten Stellung in einer Aussparung 50e des Gehäuseoberteils 50a eingreift, so dass das Stellglied 100 nicht um die zentrale Achse A gedreht werden kann. Dadurch wird eine Beschädigung des Ventils verhindert, wenn versucht wird, die Position des Stellglieds 100 im geöffneten Ventilzustand zu verändern.

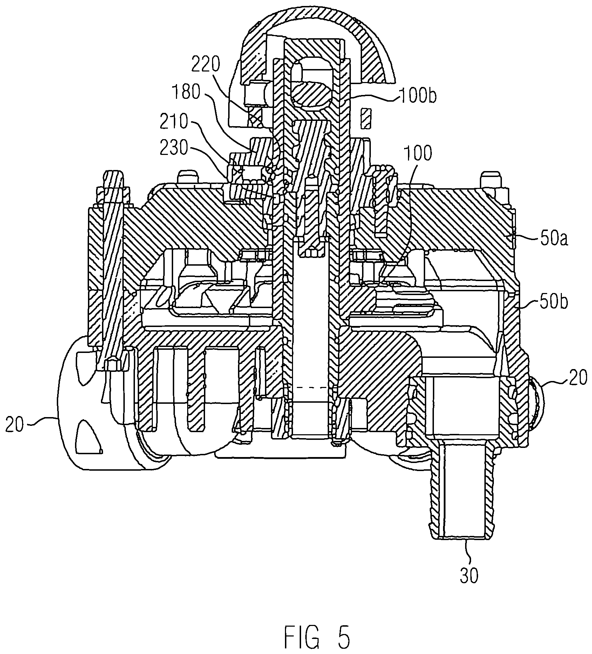

Fig. 5 zeigt einen Schnitt entlang der Linie II-II in Fig. 2, d.h. entlang der Linie zwischen den Hebelstellungen NS (neutrale Stellung) und ZS 3, d.h. Zwischenstellung 3 zum Anwählen der Ventilelemente 40-3 und 40-4. Fig. 5 zeigt eine Kugeldruckschraube 210, die in dem Flansch 180 angeordnet ist, so dass die Kugel der Kugeldruckschraube 210 radial nach innen gegen das Stellglied 100 drückt. Die Kugeldruckschraube 210 kann im Flansch 180 eingestellt (bewegt) werden, um den Anpressdruck der Kugel einzustellen. Auf einer Außenfläche des zylinderförmigen Bereichs 100b des Stellglieds 100 befinden sich zwei Reihen von Senkungen 220 und 230. Jedes Ventil wird durch eine Senkung repräsentiert. Optional können auch Senkungen für Zwischenstellungen vorgesehen werden. Beim Drehen des Hebels 60 in neutraler (geschlossener) Position, rastet die Kugeldruckschraube 210 im oberen Kranz der Senkungen 220 entsprechend einer bestimmten Ventilauswahlposition ein. So wird eine haptische und akustische Rückmeldung der Ventilposition gegeben.

Wird der Hebel 60 (siehe Fig. 4 und 5) nach unten gedrückt, dann wird das Stellglied 100 nach oben gezogen und die Kugeldruckschraube 210 rastet in einer Senkung im unteren Kranz der Senkungen 230 ein und fixiert das Stellglied 100 in der geöffneten Position. Durch die Kontur der Senkung kann die Haltekraft der Kugeldruckschraube 210 angepasst werden. Die Stellung des Stellgliedes sowie die Haltekraft kann noch dadurch erhöht werden, dass für die vorgesehene Position eine Rastnase in der Schaltkurve angebracht ist.

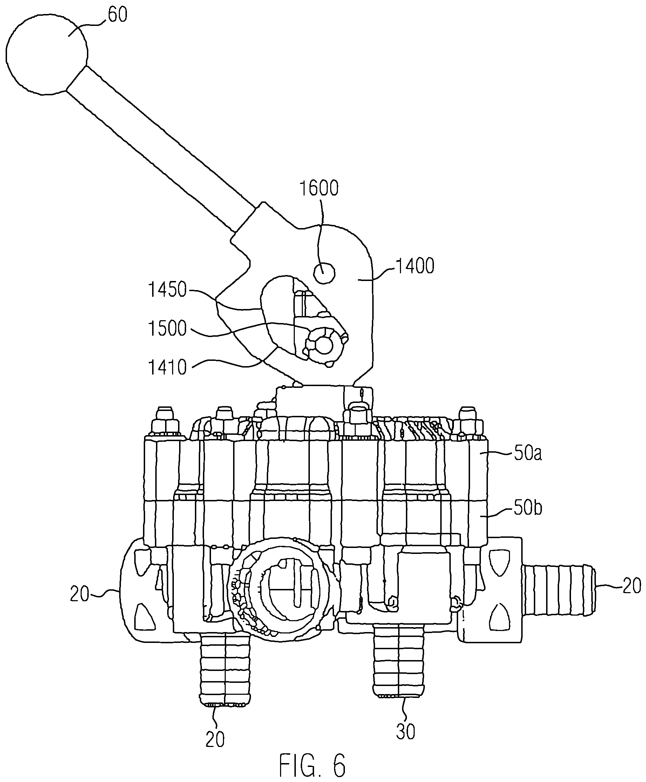

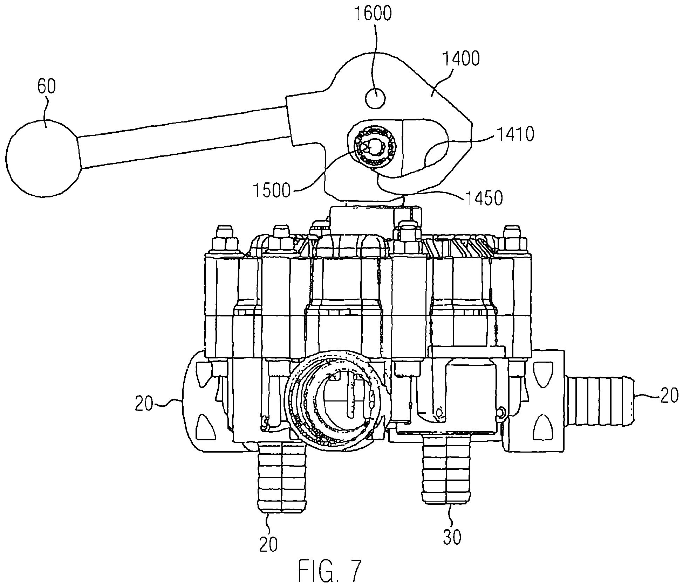

Die Fig. 6 und 7 zeigen eine alternative Ausführungsform für ein handbetätigbares Mehrwegeventil gemäß der vorliegenden Erfindung. Fig. 6 zeigt das Mehrwegeventil in einer geschlossenen Position und Fig. 7 zeigt das Mehrwegeventil in einer geöffneten Position. Da die Schaltkräfte zum Öffnen des Stellglieds sehr groß sind, kann die erforderliche Kraft durch den kurzen Hebel 60 und durch die einfache Hebefläche (Bezugszeichen 200 in Figur 4) am Schaltgriff/Hebel 60 unter Umständen nicht aufgebracht werden. In der Ausführungsform gemäß der Fig. 6 und 7 wird ein Mehrwegeventil mit einem optimierten Hebel 60 zur Optimierung der axialen Bewegung des Stellglieds bereitgestellt. Um eine Kraftverstärkung des Hebels zu erreichen, wird der Stift 1600 (Drehpunkt des Hebels 60) über dem Zylinderstift 1500 zum Anheben des Stellglieds (in Figur 6 und 7 ohne Bezugszeichen) angeordnet und in die Hebeflächen 1400 (Bezugszeichen 200 in Fig. 4) werden Kraftverstärkungskurven 1410 und 1450 eingearbeitet. Die werden Kraftverstärkungskurven 1410 und 1450 dienen als Auflagekurven 1410 und 1450, auf denen sich der Zylinderstift 1500 beim Herunterdrücken des Hebels 60 bewegt. Die Steigung der Kurve 1410 ist am Anfang des Hubes, beispielsweise die ersten vier Millimeter Hub, sehr flach, so dass große Kräfte übertragen werden können. Da bei ca. 4 mm Hub das Ventil vollständig umströmt wird und oben und unten am Ventilkörper fast der gleiche Druck herrscht, befindet sich das Ventil in einem druckausgeglichenem Zustand. Deshalb kann der restliche Hub, beispielsweise 6 mm Hub, ohne zusätzlichen Kraftaufwand mit einer größeren Steigung 1450 (siehe Fig. 7) bewältigt werden. Um die Reibung zwischen Kurvenfläche 1410 und 1450 und Mitnehmer 1400 möglichst vollständig auszuschalten, können anstelle des Zylinderstifts 1500 (Bezugszeichen 150 in Fig. 3 und 4) zwei Kugellager auf einer Welle verwendet werden. Die Lager rollen mit geringer Reibung auf der Fläche der Kurve 1410 und 1450 ab. Auch können für definierte Positionen Rastnasen in der Kurve 1410 angebracht sein.

Fig. 8 zeigt eine Draufsicht auf das Mehrwegeventil ähnlich zu Fig. 2, jedoch mit abgenommenem Hebel und Gehäuseoberteil. Das Stellglied 100 befindet sich in der Zwischenstellung ZS1, d.h. der Vorsprung 100a des Stellglieds 100 kann die Ventilelemente 40-1 und 40-2 gleichzeitig betätigen, d.h. in eine geöffnete Position bringen. In Fig. 8 ist zu sehen, dass der Vorsprung 100a des Stellglieds 100 aus dem zylindrischen Teil 100b des Stellglieds 100 herausragt. Der zylindrische Teil 100b des Stellglieds 100 ist über und um die Schaltwelle 120 gelagert. Der Vorsprung 100a des Stellglieds 100 weist eine Absenkung 100c beispielsweise von 4 mm auf. Da die Schaltkräfte doppelt so groß werden, wenn zwei Ventile gleichzeitig betätigt werden, darf das zweite Ventil erst angehoben werden, wenn sich das erste Ventil im druckausgeglichenen Zustand befindet. Durch die Absenkung 100c eilt das zweite Ventil 40-2 beim Öffnen dem ersten Ventil 40-1 nach und der gesamte Schaltvorgang kann mit gleichbleibender Kraft durchgeführt werden.

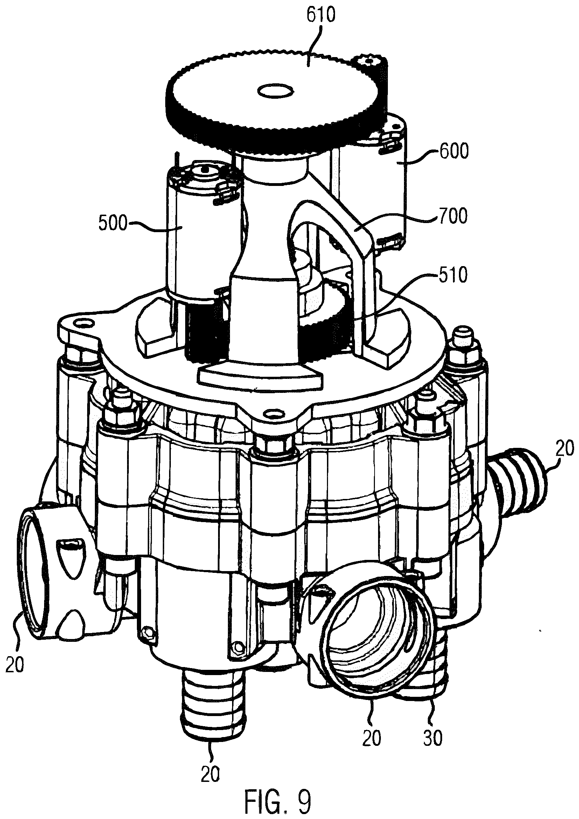

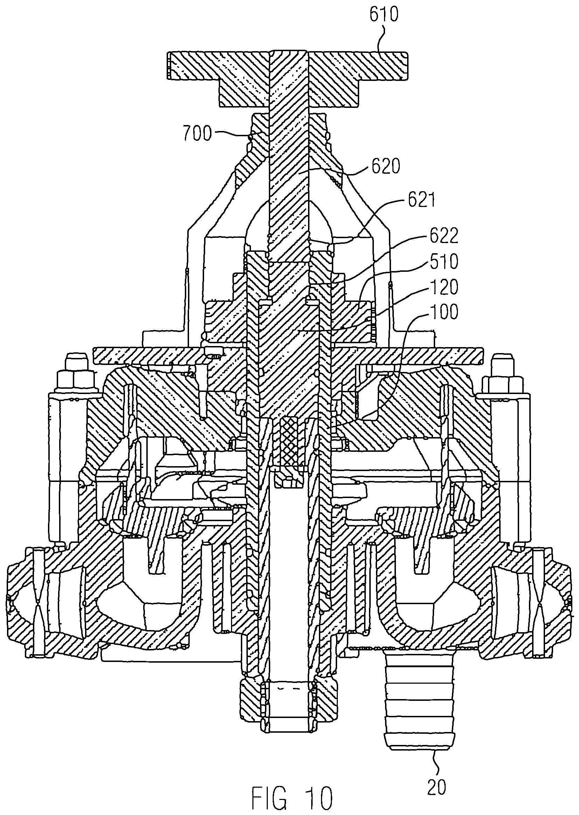

Die Fig. 9 und 10 zeigen eine Ausführungsform für ein Mehrwegeventil mit einem elektrischen Antrieb. Obwohl in dieser Beschreibung nur eine manuelle oder eine elektrische Betätigung des Mehrwegeventils beschrieben wird, ist die vorliegende Erfindung nicht auf solche Betätigungen beschränkt, sondern eine Betätigung kann auch pneumatisch oder hydraulisch erfolgen.

Fig. 9 zeigt eine perspektivische 3D-Ansicht eines elektrisch betriebenen Mehrwegeventils und die Fig. 10 zeigt einen Schnitt entlang der zentralen Achse des Mehrwegeventils. Wie in Fig. 9 zu sehen ist, ist der Hebel in den vorangegangenen Figuren durch einen Motor- und Getriebeaufsatz ersetzt. Das Bezugszeichen 500 bezeichnet einen Motor zum Drehen des Stellglieds (in Fig. 9 nicht zu sehen), um ein Ventilelement auszuwählen, und Bezugszeichen 600 bezeichnet einen Motor zum Anheben des Stellglieds, um ein Ventilelement zu öffnen. Die Drehbewegung der Motoren 500 und 600 werden über Zahnräder 510 und 610, auf die Schaltwelle und das Stellglied übertragen.

Fig. 10 zeigt im oberen Bereich des Stellglieds 100 ein Innengewinde 622, in das ein Außengewinde 621 einer Antriebswelle 620 eingreifen kann. Dreht ein Motor (in Fig. 10 nicht gezeigt) über das Zahnrad 610 die Antriebswelle 620, wird das Stellglied 100 angehoben. Über das Zahnrad 510 kann ein Motor (in Fig. 10 nicht gezeigt) das Stellglied zur Auswahl eines Ventilelements drehen.

Beispielsweise kann das Stellglied 100 im oberen Bereich mit einem LinksGewinde 622 versehen sein. Die Antriebswelle 620 erhält dann das entsprechende Gegengewinde 621. Zwischen Stellglied 100 und Antriebswelle 620 kann sich ein Freilauf befinden. Wenn sich die Antriebswelle 620 nach rechts dreht, kann das Stellglied 100 beispielsweise mittels eines Potentiometers radial positioniert werden. Wenn sich die Antriebswelle 620 nach links dreht, wird durch den Freilauf die rotierende Bewegung unterbrochen. Das Gewinde des Antriebs wirkt jetzt wie ein Spindelantrieb, der das Stellglied 100 anhebt oder absenkt. Wenn sich die Drehrichtung ändert, greift wieder der Freilauf und das Stellglied 100 kann wieder positioniert werden.

Da die Basiswelle des Mehrwegeventils als Hohlwelle ausgeführt ist, kann der Antrieb auch platzsparend auf der Rückseite des Mehrwegeventils angebracht werden.

### Liste der Bezugszeichen

- 10:: Mehrwegeventil
- 20:: Verbraucheranschlüsse
- 30:: Versorgungsanschluss
- 40, 40-1 etc.:: Ventilelemente
- 41:: sternförmige Aussparung im Oberteil des Ventilgehäuses
- 42:: Ventilkörper
- 43:: Zentrierzapfen an der Unterseite des Ventilkörpers zum Zentrieren des Ventilkörpers in der Unterseite des Ventilgehäuses
- 44:: Dichtung, beispielsweise an den Ventilkörper angespritzt
- 45:: Feder zum Schließen des Ventilelements bei geringem Druck
- 46:: seitliche Aussparung im Ventilkörper
- 47:: sternförmige Ventilführung an der Oberseite des Ventilkörpers
- 50:: Ventilgehäuse
- 50a:: Oberteil des Ventilgehäuses
- 50b:: Unterteil des Ventilgehäuses
- 50c:: Hohlraum im Oberteil des Ventilgehäuses zur Aufnahme der sternförmigen Ventilführung am Ventilkörper in einer geöffneten Position
- 50d:: Hohlraum im Ventilgehäuse zur Aufnahme des Ventilkörpers in einer geöffneten Position
- 50e:: Aussparung in der Oberseite des Ventilgehäuses zur Aufnahme einer Nase 111 des Stellglieds in einer geöffneten Position, um eine Drehbewegung des Stellglieds zu blockieren
- 60:: Hebel/Schaltgriff
- 100:: Stellglied
- 100a:: Vorsprung des Stellglieds zum Öffnen eines Ventilelements
- 100b:: Hohlzylinder förmiger oberer Teil des Stellglieds
- 100c:: Absenkung im Vorsprung 100a des Stellglieds 100 zum versetzten Betätigen von zwei benachbarten Ventilelementen in einer Zwischenstellung des Stellglieds zwischen zwei benachbarten Ventilelementen
- 101:: Nase auf dem Vorsprung des Stellglieds
- 110:: Basiswelle
- 120:: Schaltwelle
- 130:: Bund an der Basiswelle mit Verdrehsicherung zur Unterseite des Ventilgehäuses und gleichzeitig unterer Anschlag für das Stellglied
- 140:: Mitnehmer
- 150:: Zylinderstift zum Anheben des Stellglieds
- 160:: Stift als Drehachse des Hebels 60 zum Öffnen eines Ventilelements
- 170:: Nutring zur Abdichtung des Stellglieds zum Gehäuse
- 180:: Befestigungsflansch zum Fixieren des Nutrings
- 190:: Schlitze am zum Hebel zeigenden Ende des Stellglieds für Eingriff des Mitnehmers
- 195:: Dichtring zwischen Stellglied und Schaltwelle
- 196:: Dichtring zwischen Stellglied und Basiswelle
- 200:: Flächen am Hebel zur Aufnahme des Zylinderstifts 150 zum Anheben des Stellglieds 100
- 210:: Kugeldruckschraube
- 220:: Senkung im zylinderförmigen Oberteil 100b des Stellglieds 100 zum Einrasten an einer Ventilposition
- 230:: Senkung im zylinderförmigen Oberteil 100b des Stellglieds 100 zum Fixieren des Stellglieds in der geöffneten Position
- 500:: Elektromotor zum Drehen des Stellglieds
- 510:: Zahnrad zur Übertragung der Rotationsbewegung des Motors 500 auf das Stellglied 100
- 600:: Elektromotor zum Heben und Senken des Stellglieds
- 610:: Zahnrad zur Kraftübertragung der Drehbewegung des Motors 600 auf das Stellglied 100
- 620:: Antriebswelle
- 621:: Außengewinde an der Antriebswelle
- 622:: Innengewinde an der Oberseite des Stellglieds korrespondierend zum Außengewinde 621
- 700:: Haltekonstruktion für das Zahnrad 610
- 1400:: Flächen am Hebel mit eingearbeiteten Hebekurven zur Aufnahme des Zylinderstifts 150 oder des Kugellagers mit Welle 1500 zum Anheben des Stellglieds 100
- 1410, 1450:: Hebekurven zur verbesserten Kraftübertragung beim Öffnen des Ventils gegen den Druck vom Versorgungsanschluss
- 1500:: Kugellager und Welle zum Abrollen auf der Hebekurve zum Anheben/Öffnen des Stellglieds
- 1600:: Stift und Drehachse für den Hebel 60

## Patentansprüche

1. Mehrwegeventil (10) insbesondere für Landwirtschaftliche Feldspritzen das folgendes umfasst:
einen Versorgungsanschluss (30);
N Verbraucheranschlüsse (20);
N Ventilelemente (42), die jeweils eine fluiddurchlässige Verbindung zwischen dem Versorgungsanschluss (30) und mindestens einem der N Verbraucheranschlüsse (20) herstellen können; und
ein Stellglied (100) zur Auswahl mindestens eines der N Ventilelemente (42) und zum Betätigen des ausgewählten Ventilelements (42) in eine geöffnete Position oder eine geschlossene Position; wobei das Stellglied (100) und die N Ventilelemente (42) so ausgebildet und angeordnet sind, dass die Auswahl und das Betätigen eines der N Ventilelemente (42) unabhängig in 2 Stufen erfolgen kann, so dass während der Auswahl des mindestens einen Ventilelements (42) keines der N Ventilelemente (42) betätigt wird, wobei das Stellglied (100) einen sich bezüglich einer zentralen Achse (A) radial nach außen erstreckenden Vorsprung (100a) aufweist; und wobei jedes der N Ventilelemente (42) eine Aussparung (46) aufweist, in die der Vorsprung (46) des Stellglieds (100) eingreifen kann, **dadurch gekennzeichnet, dass**, sich der Vorsprung (100a) des Stellglieds (100) über einen radialen Bereich erstreckt, der wahlweise die Betätigung eines einzelnen Ventilelements (42) oder die gleichzeitige Betätigung zweier benachbarter Ventilelemente (42) erlaubt.

2. Mehrwegeventil (10) nach Anspruch 1, wobei die N Ventilelemente (42) kreisförmig um die zentrale Achse (A) in entsprechenden Hohlräumen eines Mehrwegeventilgehäuses (50) so angeordnet sind, dass die N Ventilelemente (42) unabhängig voneinander parallel zur zentralen Achse (A) innerhalb des entsprechenden Hohlraums zwischen einer geöffneten Position oder einer geschlossenen Position beweglich sind.

3. Mehrwegeventil (10) nach Anspruch 2, wobei das Stellglied (100) um die zentrale Achse (A) drehbar und parallel zur zentralen Achse (A) verschiebbar gelagert ist.

4. Mehrwegeventil (10) nach einem der Ansprüche 1 - 3, das weiterhin Folgendes umfasst:
eine zur zentralen Achse (A) koaxial angeordnete und relativ zum Mehrwegeventilgehäuse (50) drehbar gelagerte Schaltwelle (120), wobei das Stellglied (100) relativ zur Schaltwelle (120) verdrehsicher aber parallel zur zentralen Achse (A) beweglich mit der Schaltwelle (120) verbunden ist, so dass das Stellglied (100) durch die Schaltwelle (120) um die zentrale Achse (A) gedreht werden kann, um mindestens eines der N Ventilelemente (42) auszuwählen; und eine Verschiebungseinrichtung zum Verschieben des Stellglieds (100) parallel zur zentralen Achse (A) relativ zur Schaltwelle (120), so dass das Stellglied (100) durch die Verschiebungseinrichtung relativ zur Schaltwelle (120) entlang der zentralen Achse (A) zwischen einer ersten Position entsprechend einem geschlossenen Ventil und einer zweiten Position entsprechend einem geöffneten Ventil verschoben werden kann, um das mindestens eine ausgewählte Ventilelement (42) zu öffnen oder zu schließen.

5. Mehrwegeventil (10) nach Anspruch 4, wobei das Stellglied (100) koaxial um die Schaltwelle (120) herum angeordnet ist.

6. Mehrwegeventil (10) nach einem der Ansprüche 4 - 5, wobei das Stellglied (100) und die N Ventilelemente (42) so ausgebildet und angeordnet sind, dass die Schaltwelle (120) nur dann gedreht werden kann, wenn sich das Stellglied (100) in der ersten Position befindet.

7. Mehrwegeventil (10) nach einem der Ansprüche 1 - 6, wobei das Mehrwegeventil (10) so ausgebildet ist, dass sich alle N Ventilelemente (42) in der geschlossenen Position befinden, wenn der Versorgungsanschluss (30) unter Druck steht.

8. Mehrwegeventil (10) nach einem der Ansprüche 1 - 7, das weiterhin mindestens ein Vorspannelement (45) umfasst, das zumindest eines der N Ventilelemente (42) in einer geschlossenen Position hält, solange es nicht durch das Stellglied (100) betätigt wird.

9. Mehrwegeventil (10) nach einem der Ansprüche 1 - 8, das weiterhin eine Vorrichtung zum Auswählen eines Ventilelements (42) und zum Betätigen des ausgewählten Ventilelements (42) aufweist.

10. Mehrwegeventil (10) nach Anspruch 9, wobei die Vorrichtung zum Auswählen und Betätigen ein manuell betätigbarer Hebel (60) ist, der über einen Stift (160) an einem Mitnehmer (160) am Ende der Schaltwelle (120) befestigt ist, so dass der Hebel (60) senkrecht zur zentralen Achse (A) drehbar ist und parallel zur zentralen Achse (A) relativ zur Schaltwelle (120) verdrehsicher ist,
wobei der Hebel (60) weiterhin über einen Zylinderstift (150) an einem Ende des Stellglieds (100) befestigt ist, so dass das Stellglied (100) relativ zur Schaltwelle (120) mit dem Hebel (60) verschoben werden kann.

11. Mehrwegeventil (10) nach Anspruch 10, das weiterhin zwei übereinanderliegende Reihen mit N Einkerbungen oder optional 2 x N Einkerbungen an einer Außenseite eines zylinderförmigen Abschnittes des Stellglieds (100) aufweist, so dass das Stellglied (100) an einer ausgewählten Ventilposition oder optional zusätzlich an einer Zwischenposition in einer geöffneten Position oder einer geschlossenen Position einrasten kann.

12. Mehrwegeventil (10) nach einem der Ansprüche 4 - 11, das weiterhin einen Dichtungsring (195) zwischen der Schaltwelle (120) und dem Stellglied (100) sowie einen Nutring (170) zwischen dem Stellglied (100) und dem Gehäuse (50) zum Abdichten des Gehäuses (50) aufweist.

13. Mehrwegeventil (10) nach Anspruch 9, wobei die Vorrichtung zum Auswählen ein erster Motor (500) mit einem ersten Getriebemechanismus (510, 520) ist und die Vorrichtung zum Betätigen ein zweiter Motor (600) mit einem zweiten Getriebemechanismus (610, 620, 621) ist.

## Claims

1. Multiway valve (10), in particular for agricultural field spraying, which comprises the following:
a supply connection (30);
N consumer connections (20);
N valve elements (42) which can each produce a fluid-permeable connection between the supply connection (30) and at least one of the N consumer connections (20); and
an actuator (100) for selecting at least one of the N valve elements (42) and for actuating the selected valve element (42) into an open position or a closed position;
wherein the actuator (100) and the N valve elements (42) are designed and arranged in such a manner that the selection and the actuation of one of the N valve elements (42) can take place independently in two stages, and therefore, during the selection of the at least one valve element (42), none of the N valve elements (42) is actuated, wherein the actuator (100) has a projection (100a) extending radially outwards with respect to a central axis (A); and wherein each of the N valve elements (42) has a recess (46) in which the projection (46) of the actuator (100) can engage, **characterized in that** the projection (100a) of the actuator (100) extends over a radial region which permits optionally the actuation of an individual valve element (42) or the simultaneous actuation of two adjacent valve elements (42).

2. Multiway valve (10) according to Claim 1, wherein the N valve elements (42) are arranged in a circular manner around the central axis (A) in corresponding cavities of a multiway valve housing (50) in such a manner that the N valve elements (42) are movable independently of one another parallel to the central axis (A) within the corresponding cavity between an open position or a closed position.

3. Multiway valve (10) according to Claim 2, wherein the actuator (100) is mounted rotatably about the central axis (A) and displaceably parallel to the central axis (A).

4. Multiway valve (10) according to one of Claims 1-3, which furthermore comprises the following:
a switching shaft (120) which is arranged coaxially with respect to the central axis (A) and is mounted rotatably relative to the multiway valve housing (50), wherein the actuator (100) is connected to the switching shaft (120) so as to be secure against rotation relative to the switching shaft (120) but movable parallel to the central axis (A), such that the actuator (100) can be rotated about the central axis (A) by the switching shaft (120) in order to select at least one of the N valve elements (42); and
a displacement device for displacing the actuator (100) parallel to the central axis (A) relative to the switching shaft (120), and therefore the actuator (100) can be displaced by the displacement device relative to the switching shaft (120) along the central axis (A) between a first position corresponding to a closed valve and a second positon corresponding to an open valve in order to open or to close the at least one selected valve element (42).

5. Multiway valve (10) according to Claim 4, wherein the actuator (100) is arranged coaxially around the switching shaft (120).

6. Multiway valve (10) according to either of Claims 4-5, wherein the actuator (100) and the N valve elements (42) are designed and arranged in such a manner that the switching shaft (120) can be rotated only when the actuator (100) is in the first position.

7. Multiway valve (10) according to one of Claims 1-6, wherein the multiway valve (10) is designed in such a manner that all of the N valve elements (42) are in the closed position when the supply connection (30) is under pressure.

8. Multiway valve (10) according to one of Claims 1-7, which furthermore comprises at least one prestressing element (45) which holds at least one of the N valve elements (42) in a closed position as long as it is not actuated by the actuator (100).

9. Multiway valve (10) according to one of Claims 1-8, which furthermore has a device for selecting a valve element (42) and for actuating the selected valve element (42).

10. Multiway valve (10) according to Claim 9, wherein the selecting and actuating device is a manually actuable lever (60) which is coupled via a pin (160) to a driver (160) at the end of the switching shaft (120) such that the lever (60) is rotatable perpendicularly to the central axis (A) and is secure against rotation relative to the switching shaft (120) parallel to the central axis (A),
wherein the lever (60) is furthermore fastened via a cylinder pin (150) to one end of the actuator (100) such that the actuator (100) can be displaced relative to the switching shaft (120) with the lever (60).

11. Multiway valve (10) according to Claim 10, which furthermore has two rows lying one above the other with N notches or optionally 2 × N notches on an outer side of a cylindrical portion of the actuator (100), and therefore the actuator (100) can latch in place at a selected valve position or optionally additionally at an intermediate position in an open position or a closed position.

12. Multiway valve (10) according to one of Claims 4-11, which furthermore has a sealing ring (195) between the switching shaft (120) and the actuator (100) and also a groove ring (170) between the actuator (100) and the housing (50) for sealing the housing (50).

13. Multiway valve (10) according to Claim 9, wherein the selecting device is a first motor (500) with a first gear mechanism (510, 520), and the actuating device is a second motor (600) with a second gear mechanism (610, 620, 621).

## Revendications

1. Vanne multivoies (10) en particulier pour des pulvérisateurs agricoles, qui comprend ce qui suit:
- un raccord d'alimentation (30);
- N raccords de consommateurs (20);
- N éléments de vanne (42), qui peuvent respectivement établir une liaison perméable au fluide entre le raccord d'alimentation (30) et au moins un des N raccords de consommateurs (20); et
- un organe de réglage (100) pour sélectionner au moins un des N éléments de vanne (42) et pour actionner l'élément de vanne sélectionné (42) dans une position ouverte ou une position fermée;
dans laquelle l'organe de réglage (100) et les N éléments de vanne (42) sont configurés et disposés de telle manière que la sélection et l'actionnement d'un des N éléments de vanne (42) puissent se faire de façon indépendante en deux étapes, de telle manière que pendant la sélection dudit au moins un élément de vanne (42) aucun des N éléments de vanne (42) ne soit actionné, dans lequel l'organe de réglage (100) présente une saillie (100a) s'étendant radialement vers l'extérieur par rapport à un axe central (A); et dans lequel chacun des N éléments de vanne (42) présente une découpe (46), dans laquelle la saillie (46) de l'organe de réglage (100) peut s'engager, **caractérisée en ce que** la saillie (100a) de l'organe de réglage (100) s'étend sur une région radiale, qui permet au choix l'actionnement d'un seul élément de vanne (42) ou l'actionnement simultané de deux éléments de vanne voisins (42).

2. Vanne multivoies (10) selon la revendication 1, dans laquelle les N éléments de vanne (42) sont disposés en forme de cercle autour de l'axe central (A) dans des cavités correspondantes d'un corps de vanne multivoies (50), de telle manière que les N éléments vanne (42) soient mobiles indépendamment l'un de l'autre parallèlement à l'axe central (A) à l'intérieur de la cavité correspondante entre une position ouverte et une position fermée.

3. Vanne multivoies (10) selon la revendication 2, dans laquelle l'organe de réglage (100) est monté de façon rotative autour de l'axe central (A) et déplaçable parallèlement à l'axe central (A).

4. Vanne multivoies (10) selon l'une quelconque des revendications 1 à 3, qui comprend en outre ce qui suit:
- un arbre de commutation (120) disposé de façon coaxiale à l'axe central (A) et monté de façon rotative par rapport au corps de vanne multivoies (50), dans lequel l'organe de réglage (100) est relié à l'arbre de commutation (120) d'une façon calée en rotation par rapport à l'arbre de commutation (120) mais mobile parallèlement à l'arbre central (A), de telle manière que l'organe de réglage (100) puisse être mis en rotation par l'arbre de commutation (120) autour de l'axe central (A), afin de sélectionner au moins un des N éléments de vanne (42); et
- un dispositif de déplacement pour déplacer l'organe de réglage (100) parallèlement à l'axe central (A) par rapport à l'arbre de commutation (120), de telle manière que l'organe de réglage (100) puisse être déplacé par le dispositif de déplacement par rapport à l'arbre de commutation (120), le long de l'axe central (A) entre une première position correspondant à une vanne fermée et une deuxième position correspondant à une vanne ouverte, afin d'ouvrir ou de fermer ledit au moins un élément de vanne sélectionné (42).

5. Vanne multivoies (10) selon la revendication 4, dans laquelle l'organe de réglage (100) est disposé de façon coaxiale autour de l'arbre de commutation (120).

6. Vanne multivoies (10) selon une des revendications 4 ou 5, dans laquelle l'organe de réglage (100) et les N éléments de vanne (42) sont configurés et disposés de telle manière que l'arbre de commutation (120) ne puisse être mis en rotation que lorsque l'organe de réglage (100) se trouve dans la première position.

7. Vanne multivoies (10) selon l'une quelconque des revendications 1 à 6, dans laquelle la vanne multivoies (10) est configurée de telle manière que tous les N éléments de vanne (42) se trouvent dans la position fermée, lorsque le raccord d'alimentation (30) se trouve sous pression.

8. Vanne multivoies (10) selon l'une quelconque des revendications 1 à 7, qui comprend en outre au moins un élément de précontrainte (45), qui maintient au moins un des N éléments de vanne (42) dans une position fermée, aussi longtemps qu'il n'est pas actionné par l'organe de réglage (100).

9. Vanne multivoies (10) selon l'une quelconque des revendications 1 à 8, qui présente en outre un dispositif pour sélectionner un élément de vanne (42) et pour actionner l'élément de vanne sélectionné (42).

10. Vanne multivoies (10) selon la revendication 9, dans laquelle le dispositif de sélection et d'actionnement est un levier actionnable manuellement (60), qui est fixé par une tige (160) à un élément d'entraînement (160) à l'extrémité de l'arbre de commutation (120), de telle manière que le levier (60) puisse tourner perpendiculairement à l'axe central (A) et soit calé en rotation par rapport à l'arbre de commutation (120) parallèlement à l'axe central (A), dans laquelle le levier (60) est en outre fixé par une tige cylindrique (150) à une extrémité de l'organe de réglage (100), de telle manière que l'organe de réglage (100) puisse être déplacé par rapport à l'arbre de commutation (120) avec le levier (60).

11. Vanne multivoies (10) selon la revendication 10, qui présente en outre deux rangées superposées avec N encoches ou en option 2 x N encoches sur un côté extérieur d'une partie cylindrique de l'organe de réglage (100), de telle manière que l'organe de réglage (100) à une position de vanne sélectionnée ou en option en plus à une position intermédiaire puisse s'encliqueter dans une position ouverte ou dans une position fermée.

12. Vanne multivoies (10) selon l'une quelconque des revendications 4 à 11, qui présente en outre un anneau d'étanchéité (195) entre l'arbre de commutation (120) et l'organe de réglage (100), ainsi qu'un joint à gorge (170) entre l'organe de réglage (100) et le corps (50) pour l'étanchéité du corps (50).

13. Vanne multivoies (10) selon la revendication 9, dans laquelle le dispositif de sélection est un premier moteur (500) avec un premier mécanisme de transmission (510, 520) et le dispositif d'actionnement est un deuxième moteur (600) avec un deuxième mécanisme de transmission (610, 620, 621)
